# FASCICULE DE BREVET EUROPEEN

(11) **EP 3 638 529 B1**
(45) Date de publication et mention de la délivrance du brevet: **24.02.2021**
(21) Numéro de dépôt: 18735655.5
(22) Date de dépôt: 25.05.2018
(51) Int. Cl.: B60K 6/48, B60W 20/13, B60W 30/18, B60W 10/26

(54) **CONTRÔLE DE LA RECHARGE À BASSE VITESSE D'UN STOCKEUR D'UN VÉHICULE HYBRIDE À MACHINE MOTRICE NON-THERMIQUE LIÉE MÉCANIQUEMENT À UN TRAIN**
STEUERUNG DER LANGSAMEN WIEDERAUFLADUNG EINES AKKUMULATORS EINES HYBRIDFAHRZEUGS MIT EINER ANTRIEBSMASCHINE VOM NICHTWÄRMETYP, DIE MECHANISCH MIT EINER ACHSANORDNUNG VERBUNDEN IST
CONTROL OF THE RECHARGING AT LOW SPEED OF AN ACCUMULATOR OF A HYBRID VEHICLE WITH A NON-HEAT-TYPE DRIVING MACHINE MECHANICALLY CONNECTED TO AN AXLE ASSEMBLY

(30) Priorité: 14.06.2017 FR 1755334
(43) Date de publication de la demande: 22.04.2020
(73) Titulaire: PSA Automobiles SA, 78300 Poissy (FR)
(72) Inventeur: COZ, Emmanuel, 92190 Meudon (FR)
(86) Numéro de dépôt international: PCT/FR2018/051237
(87) Numéro de publication internationale: WO 2018/229379

(56) Documents cités:
- EP-A1- 2 113 435
- WO-A1-2012/066400
- DE-A1- 10 333 603
- DE-A1-102007 041 571

## Description

L'invention concerne les véhicules qui comprennent une chaîne de transmission hybride dans laquelle une machine motrice non-thermique est toujours liée mécaniquement à un train lorsqu'ils se déplacent.

Comme le sait l'homme de l'art, dans les véhicules du type de ceux définis dans le paragraphe précédent, la chaîne de transmission hybride comprend un train (éventuellement de roues), au moins un moyen de stockage d'énergie (rechargeable), une première machine motrice non-thermique et propre à être couplée à ce train via des moyens de changement de rapport ayant un état ouvert de découplage et un état fermé de couplage, et une seconde machine motrice thermique et propre à être couplée à ce train via des moyens de couplage, la machine électrique et les moyens de changement de rapport.

On entend ici par « machine motrice non-thermique » une machine agencée de manière à fournir ou récupérer du couple pour déplacer un véhicule, soit seule soit en complément de la machine motrice thermique. Il pourra par exemple s'agir d'une machine (ou moteur) électrique, d'une machine hydraulique, d'une machine pneumatique (ou à air comprimé), ou d'un volant d'inertie. Par conséquent, le moyen de stockage d'énergie (ou stockeur) peut être de type électrique, hydraulique ou pneumatique.

Parfois, les véhicules précités comprennent également un dispositif de contrôle chargé de déclencher le placement des moyens de changement de rapport dans leur état ouvert pour recharger le moyen de stockage d'énergie (ou stockeur) avec la première machine motrice lorsque le véhicule circule à une basse vitesse inférieure à un seuil prédéfini (typiquement égal à 5 km/h). Pendant une telle recharge à basse vitesse les moyens de couplage demeurent placés dans leur état fermé de couplage afin que la première machine motrice utilise le couple produit par la seconde machine motrice pour fonctionner en générateur et ainsi produire de l'énergie destinée à recharger le moyen de stockage d'énergie. Le véhicule étant à l'arrêt, sa seconde machine motrice fonctionne a priori à son régime de ralenti, et donc on est contraint d'élever ce régime pour que le régime de la première machine motrice devienne suffisamment élevé pour permettre une recharge effective du moyen de stockage d'énergie. Sans cette augmentation du régime de la seconde machine motrice, le régime de la première machine motrice est en effet trop faible pour induire une recharge du moyen de stockage d'énergie. Or, cette augmentation induit une surconsommation de carburant.

Lorsque le conducteur décide de repartir, par exemple en appuyant sur la pédale d'accélérateur, le dispositif de contrôle met immédiatement fin à la recharge du moyen de stockage d'énergie et les moyens de changement de rapport sont de nouveau placés dans leur état fermé. Ces opérations de fin de recharge et de fermeture des moyens de changement de rapport peuvent durer entre 500 ms et 1,5 s, et donc cette durée peut être perçue par le conducteur comme un délai important de reprise du groupe motopropulseur (ou GMP) de la chaîne de transmission.

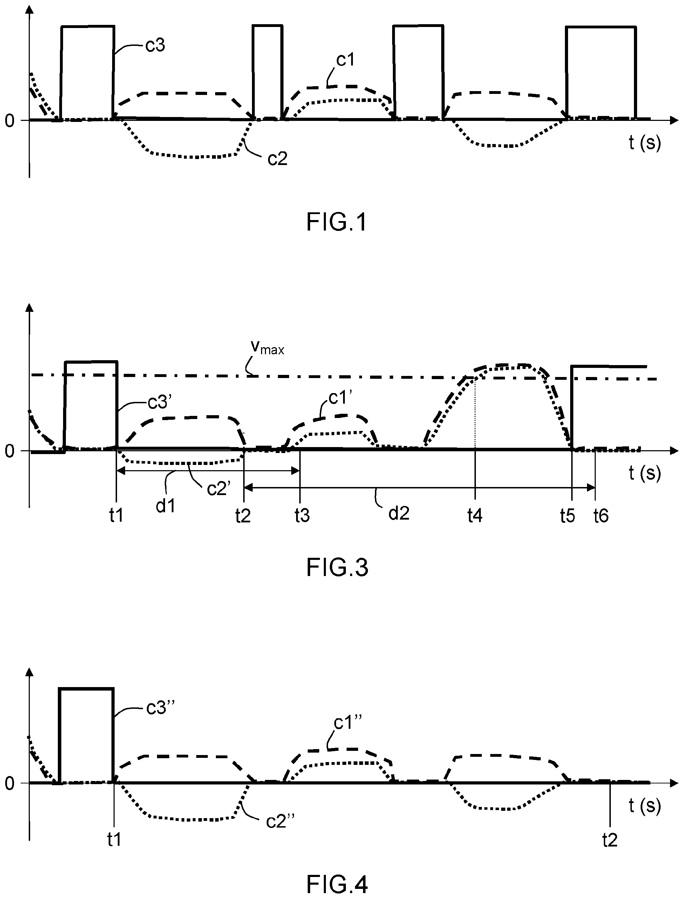

Lors d'une manœuvre, par exemple, destinée à garer le véhicule, ce dernier fait généralement l'objet d'au moins deux déplacements et d'au moins trois arrêts (deux intermédiaires brefs et un final). Par exemple, lorsque l'on gare le véhicule en créneau, il est fréquent d'avoir à réaliser trois déplacements (deux marches arrière et une marche avant) et quatre arrêts (trois intermédiaires brefs et un final). Cet exemple de manœuvre destinée à garer un véhicule hybride en créneau est illustré dans le diagramme de la figure 1. La courbe c1 représente l'évolution temporelle de l'enfoncement de la pédale d'accélérateur du véhicule (ou volonté du conducteur). La courbe c2 représente l'évolution temporelle de la vitesse du véhicule en présence de la courbe c1. La courbe c3 représente l'évolution temporelle de la recharge du moyen de stockage d'énergie à basse vitesse contrôlée par un dispositif de contrôle de l'art antérieur en présence des courbes c1 et c2.

On connait, par exemple, des documents de brevet EP-A1-2113435, DE-A1-10333603, ou DE-A1-102007041571 des dispositifs de contrôle proches du préambule de la revendication 1.

Il ressort de ce qui précède que pendant une manœuvre (d'une durée généralement inférieure à une minute), chaque fois que la vitesse devient inférieure au seuil prédéfini (juste avant l'un des arrêts) la recharge est déclenchée et chaque fois que le véhicule repart (après l'un des arrêts) la recharge est interrompue. Cette succession de déclenchements et d'interruptions de la recharge entraine un désagrément pour le conducteur du fait qu'il perçoit à chaque fois le temps de réaction du GMP et la variation de charge de la seconde machine motrice.

L'invention a donc notamment pour but d'améliorer la situation.

Elle propose notamment un dispositif de contrôle, d'une part, destiné à équiper un véhicule comprenant un train, au moins un moyen de stockage d'énergie (rechargeable), une première machine motrice non-thermique et propre à être couplée au train via des moyens de changement de rapport ayant un état ouvert de découplage et un état fermé de couplage, et une seconde machine motrice thermique et propre à être couplée au train via des moyens de couplage ayant un état ouvert de découplage et un état fermé de couplage, la première machine motrice et les moyens de changement de rapport, et, d'autre part, comprenant des moyens de contrôle déclenchant un placement des moyens de changement de rapport dans leur état ouvert et un placement desdits moyens de couplage (MCP) dans leur état fermé pour recharger le moyen de stockage d'énergie avec la première machine motrice lorsque le véhicule a une basse vitesse inférieure ou égale à un seuil prédéfini de 5 Km/h.

Ce dispositif de contrôle se caractérise par le fait que ses moyens de contrôle interdisent pendant une durée choisie une réactivation de la recharge en cas de bref arrêt compris entre 300 ms et 2 secondes du véhicule, représentatif d'un début de manœuvre, suivi d'un nouveau déplacement à basse vitesse du véhicule entraînant une désactivation de la recharge.

Ainsi, pendant une manœuvre, à basse vitesse et débutant par un bref arrêt, il n'y a plus de succession de déclenchements et d'interruptions de la recharge, et donc le conducteur ne risque plus d'être perturbé et/ou déçu par le fonctionnement du GMP.

Le dispositif de contrôle selon l'invention peut comporter d'autres caractéristiques qui peuvent être prises séparément ou en combinaison, et notamment :
- dans un premier mode de réalisation, ses moyens de contrôle peuvent interdire la réactivation de la recharge pendant une durée choisie qui est égale à une première durée prédéfinie débutant juste après le début du nouveau déplacement du véhicule ayant entraîné la désactivation de la recharge ;
   > la première durée prédéfinie peut être comprise entre une seconde et une minute ;
- dans un deuxième mode de réalisation, ses moyens de contrôle peuvent interdire la réactivation de la recharge pendant une durée choisie qui est égale à une seconde durée prédéfinie débutant juste après une fin du nouveau déplacement du véhicule ayant entraîné la désactivation de la recharge ;
   > la seconde durée prédéfinie peut être comprise entre cinq secondes et deux minutes ;
- ses moyens de contrôle peuvent détecter le bref arrêt débutant une manœuvre lorsque ce dernier est compris entre 300 ms et 2 secondes ;
- dans un troisième mode de réalisation, le véhicule comprend en outre un dispositif d'assistance chargé de le conduire de façon au moins partiellement autonome, et notamment permettant de décider et contrôler la manœuvre, ses moyens de contrôle interdisant aussi une réactivation de la recharge en cas de réception d'un message généré par le dispositif d'assistance signalant le début d'une manœuvre, et cessant cette interdiction en cas de réception d'un message généré par ce dispositif d'assistance à la fin de cette manœuvre signalant l'arrêt final du véhicule. La durée choisie est alors égale au temps écoulé entre l'instant de réception du message de début de manœuvre et l'instant de réception du message d'arrêt final (ou fin de manœuvre).

L'invention propose également un véhicule, éventuellement de type automobile, et comprenant :
- un train,
- au moins un moyen de stockage d'énergie (rechargeable),
- une première machine motrice non-thermique et propre à être couplée à ce train via des moyens de changement de rapport ayant un état ouvert de découplage et un état fermé de couplage,
- une machine motrice thermique et propre à être couplée à ce train, via des moyens de couplage, la première machine motrice et les moyens de changement de rapport, et
- un dispositif de contrôle du type de celui présenté ci-avant.

L'invention propose également un véhicule, éventuellement de type automobile, et comprenant :
- un train,
- au moins un moyen de stockage d'énergie (rechargeable),
- une première machine motrice non-thermique et propre à être couplée à ce train via des moyens de changement de rapport ayant un état ouvert de découplage et un état fermé de couplage,
- une seconde machine motrice thermique et propre à être couplée à ce train, via des moyens de couplage, la première machine motrice et les moyens de changement de rapport,
- un dispositif d'assistance chargé de le conduire de façon au moins partiellement autonome et
- un dispositif de contrôle du type de celui présenté ci-avant.

L'invention propose également un procédé de contrôle, d'une part, destiné à être mis en œuvre dans un véhicule comprenant un train, au moins un moyen de stockage d'énergie (rechargeable), une première machine motrice non-thermique et propre à être couplée au train via des moyens de changement de rapport ayant un état ouvert de découplage et un état fermé de couplage, et une seconde machine motrice thermique et propre à être couplée au train via des moyens de couplage ayant un état ouvert de découplage et un état fermé de couplage, la première machine motrice et les moyens de changement de rapport, et, d'autre part, comprenant une étape dans laquelle on place les moyens de changement de rapport dans leur état ouvert et les moyens de couplage dans leur état fermé pour recharger le moyen de stockage d'énergie avec la première machine motrice lorsque le véhicule a une basse vitesse inférieure ou égale à un seuil prédéfini de 5 Km/h.

Ce procédé de contrôle se caractérise par le fait que dans son étape on interdit une réactivation de la recharge en cas de bref arrêt compris entre 300 ms et 2 secondes du véhicule, représentatif d'un début de manœuvre, suivi d'un nouveau déplacement à basse vitesse du véhicule entraînant une désactivation de la recharge.

D'autres caractéristiques et avantages de l'invention apparaîtront à l'examen de la description détaillée ci-après, et des dessins annexés, sur lesquels :
- la figure 1 illustre schématiquement, au sein d'un premier diagramme, des courbes d'évolutions temporelles de l'enfoncement de la pédale d'accélérateur d'un véhicule (c1), de la vitesse de ce véhicule (c2) en présence de la courbe c1, et de la recharge d'un moyen de stockage d'énergie à basse vitesse (c3) contrôlée par un dispositif de contrôle de l'art antérieur en présence des courbes c1 et c2,

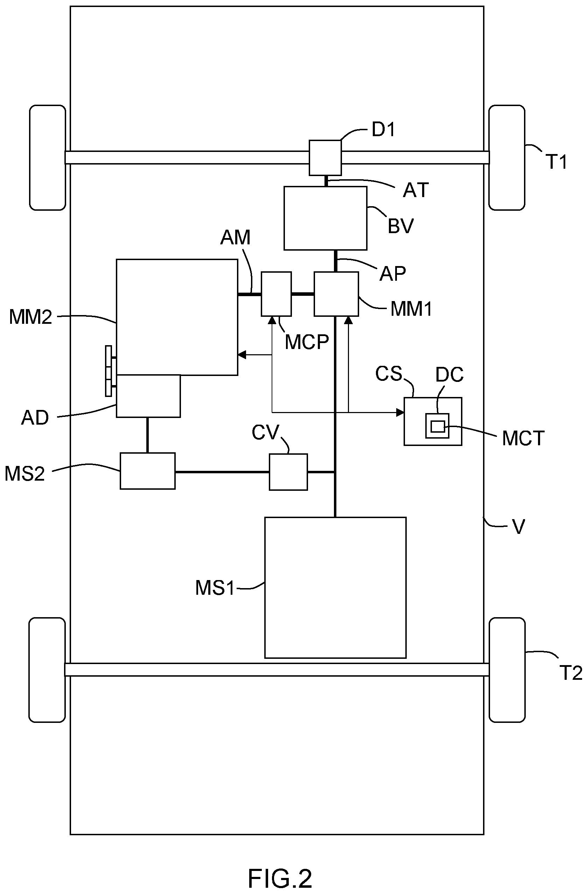

- la figure 2 illustre schématiquement et fonctionnellement un véhicule comprenant une chaîne de transmission hybride et un calculateur de supervision équipé d'un dispositif de contrôle selon l'invention,
- la figure 3 illustre schématiquement, au sein d'un deuxième diagramme, des courbes d'évolutions temporelles de l'enfoncement de la pédale d'accélérateur d'un véhicule à conduite manuelle (c1'), de la vitesse de ce véhicule (c2') en présence de la courbe c1', et de la recharge à basse vitesse d'un moyen de stockage d'énergie (c3') contrôlée par un dispositif de contrôle selon l'invention en présence des courbes c1' et c2', et
- la figure 4 illustre schématiquement, au sein d'un troisième diagramme, des courbes d'évolutions temporelles de l'enfoncement de la pédale d'accélérateur virtuelle d'un véhicule à conduite autonome (c1"), de la vitesse de ce véhicule (c2") en présence de la courbe c1", et de la recharge à basse vitesse d'un moyen de stockage d'énergie (c3") contrôlée par un dispositif de contrôle selon l'invention en présence des courbes c1" et c2".

L'invention a notamment pour but de proposer un dispositif de contrôle DC destiné à équiper un véhicule V comprenant une chaîne de transmission hybride dans laquelle une première machine motrice MM1, non-thermique et consommant de l'énergie stockée dans un premier moyen de stockage MS1, est toujours liée mécaniquement à un train T1 lorsque le véhicule V se déplace. Un tel dispositif de contrôle DC est destiné à contrôler la recharge à basse vitesse de ce premier moyen de stockage MS1 par la première machine motrice MM1.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comportant une chaîne de transmission hybride dans laquelle une machine motrice, non-thermique et consommant de l'énergie stockée dans un moyen de stockage, est toujours liée mécaniquement à un train lorsque le véhicule V se déplace. Par conséquent, l'invention concerne non seulement les véhicules terrestres, mais également les avions, et d'une manière générale tous les véhicules pouvant être manœuvrés.

On a schématiquement représenté sur la figure 2 un véhicule V comprenant une chaîne de transmission hybride, un calculateur de supervision CS propre à superviser (ou gérer) le fonctionnement de la chaîne de transmission, et un dispositif de contrôle DC selon l'invention.

Dans l'exemple illustré non limitativement sur la figure 2, la chaîne de transmission hybride comprend, notamment, une première machine motrice MM1, non-thermique et consommant de l'énergie stockée dans un premier moyen de stockage MS1, une seconde machine motrice MM2 thermique, des moyens de changement de rapport BV, des moyens de couplage MCP et un arbre de transmission AT.

Il est rappelé que l'on entend ici par « machine motrice non-thermique » une machine non-thermique agencée de manière à fournir ou récupérer du couple pour déplacer un véhicule, soit seule soit en complément d'une machine motrice thermique.

Par ailleurs, on entend ici par « machine motrice thermique » un moteur consommant du carburant ou des produits chimiques. Par conséquent, il pourra notamment s'agir d'un réacteur, d'un turboréacteur ou d'un moteur chimique.

D'autre part, on considère dans ce qui suit, à titre d'exemple non limitatif, que la première machine motrice MM1 est de type électrique. Mais l'invention n'est pas limitée à ce type de machine motrice non-thermique. Ainsi, elle concerne également et notamment les machines (ou moteurs) hydrauliques, les machines (ou moteurs) pneumatiques (ou à air comprimé), et les volants d'inertie.

Etant donné que l'on considère ici que la première machine motrice MM1 est de type électrique, le premier moyen de stockage d'énergie MS1 qui l'alimente est agencé pour stocker de l'énergie électrique, par exemple en basse tension (typiquement 300 V).

Comme illustré, la première machine motrice MM1 (non-thermique) est propre à être couplée à un train T1 du véhicule V via des moyens de changement de rapport BV ayant un état ouvert de découplage et un état fermé de couplage.

Par exemple, le train T1 est situé à l'avant du véhicule V, et de préférence, et comme illustré, couplé à l'arbre de transmission AT via un différentiel (ici avant) D1. Mais dans une variante ce train T1 pourrait être situé à l'arrière du véhicule V.

Les moyens de changement de rapport BV peuvent, par exemple, être agencés sous la forme d'une boîte de vitesses. Ils comprennent un arbre primaire (ou d'entrée) AP destiné à recevoir du couple de la première machine motrice MM1 et/ou de la seconde machine motrice MM2, et un arbre secondaire (ou de sortie) destiné à recevoir ce couple via l'arbre primaire AP afin de le communiquer à l'arbre de transmission AT auquel il est couplé et qui est couplé indirectement à des roues (ici avant) du véhicule V via le différentiel D1. Mais dans une variante de réalisation les moyens de changement de rapport BV pourraient, par exemple, comprendre au moins un train épicycloïdal comprenant un, deux ou trois synchronisateurs. Il est rappelé que les synchronisateurs permettent de solidariser deux éléments entre eux afin de fixer un couple et un régime sur deux des trois arbres d'un train épicycloïdal.

La seconde machine motrice MM2 est par exemple un moteur thermique comprenant un vilebrequin (non représenté) qui est solidarisé fixement à un arbre moteur AM afin d'entraîner ce dernier (AM) en rotation. Cette seconde machine motrice MM2 est destinée à fournir du couple au train T1 (ici de roues), via les moyens de couplage MCP, la première machine motrice MM1 et les moyens de changement de rapport BV.

Les moyens de couplage MCP sont chargés de coupler/découpler la seconde machine motrice MM2 à/de la première machine motrice MM1.

Ces moyens de couplage MCP peuvent, par exemple, être agencés sous la forme d'un embrayage. Mais il pourrait également s'agir d'un convertisseur de couple ou d'un mécanisme à crabots ou encore d'un convertisseur de couple hydraulique. Ils peuvent prendre au moins un état fermé dans lequel ils assurent le couplage de la seconde machine motrice MM2 (et plus précisément de l'arbre moteur AM) à la première machine motrice MM1, et un état ouvert dans lequel ils découplent la seconde machine motrice MM2 de la première machine motrice MM1.

On notera, comme illustré non limitativement sur la figure 2, que la chaîne de transmission hybride peut également comprendre un démarreur ou un alterno-démarreur AD couplé à la seconde machine motrice MM2 et chargé de lancer cette dernière (MM2) afin de lui permettre de démarrer. Ce lancement se fait grâce à de l'énergie électrique qui est, par exemple et comme illustré non limitativement, stockée dans un second moyen de stockage MS2.

Ce second moyen de stockage MS2 peut être agencé sous la forme d'une batterie très basse tension (par exemple 12 V, 24 V ou 48V). Cette dernière (MS2) peut, par exemple, alimenter un réseau de bord auquel sont connectés des équipements électriques du véhicule V. On notera que le second moyen de stockage MS2 peut, comme illustré non limitativement, être couplé au premier moyen de stockage d'énergie MS1 via un convertisseur CV de type DC/DC, afin de pouvoir être rechargé.

On notera également que la chaîne de transmission hybride pourrait aussi comprendre une autre machine motrice non-thermique, couplée à un autre train T2 (ici arrière) via d'autres moyens de couplage, et consommant de l'énergie stockée dans le premier moyen de stockage MS1.

Les fonctionnements des première MM1 et seconde MM2 machines motrices, des moyens de couplage MCP et des moyens de changement de rapport BV peuvent être contrôlés par le calculateur de supervision CS. Ce dernier (CS) est par exemple capable de faire fonctionner le véhicule V dans au moins trois modes de roulage différents.

Dans un premier mode dit « thermique » seule la seconde machine motrice MM2 est utilisée pour déplacer le véhicule V (mais la première machine motrice MM1 tourne toujours même si elle ne produit pas de couple).

Dans un deuxième mode dit « Zéro Emission Véhicule » (ou ZEV)) seule la première machine motrice MM1 est utilisée pour déplacer le véhicule V.

Dans un troisième mode dit « hybride » les première MM1 et seconde MM2 machines motrices sont utilisées simultanément pour déplacer le véhicule V.

Comme indiqué précédemment, l'invention propose un dispositif de contrôle DC destiné à contrôler la recharge à basse vitesse du premier moyen de stockage MS1 par la première machine motrice MM1.

Dans l'exemple non limitatif illustré sur la figure 2, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend au moins des moyens de contrôle MCT qui sont agencés de manière à déclencher un placement des moyens de changement de rapport BV dans leur état ouvert pour recharger le premier moyen de stockage d'énergie MS1 avec la première machine motrice MM1 lorsque le véhicule V circule à une basse vitesse.

On entend ici par « circuler à une basse vitesse » le fait de circuler à une vitesse qui est inférieure à un seuil prédéfini s1. Par exemple, ce seuil prédéfini s1 peut être égal à 5 km/h.

Par ailleurs, il est rappelé que pendant cette recharge à basse vitesse les moyens de contrôle MCT imposent que les moyens de couplage MCP demeurent placés dans leur état fermé de couplage afin que la première machine motrice MM1 utilise le couple produit par la seconde machine motrice MM2 pour fonctionner en générateur et ainsi produire de l'énergie destinée à recharger le premier moyen de stockage d'énergie MS1.

Les moyens de contrôle MCT sont de plus agencés de manière à interdire pendant une durée choisie une réactivation de la recharge à basse vitesse en cas de bref arrêt du véhicule V, représentatif d'un début de manœuvre (à basse vitesse), suivi d'un nouveau déplacement à basse vitesse du véhicule V entraînant une désactivation de la recharge. Ce nouveau déplacement peut être une marche avant ou une marche arrière.

En d'autres termes, dès qu'une manœuvre à basse vitesse a débuté par un bref arrêt pendant une phase de recharge à basse vitesse, les moyens de contrôle MCT provoquent une interdiction de cette phase pendant une durée choisie. Par conséquent, pendant une manœuvre, à basse vitesse et débutant par un bref arrêt, le conducteur ne risque plus de percevoir une succession de déclenchements et d'interruptions de la recharge, et donc ne risque plus d'être perturbé et/ou déçu par le fonctionnement du GMP.

On entend ici par « bref arrêt » un arrêt du véhicule V qui est, par exemple, compris entre 300 ms et 2 secondes. Dans ce cas, les moyens de contrôle MCT sont agencés pour détecter un bref arrêt débutant une manœuvre lorsqu'il est compris entre 300 ms et 2 secondes.

Plusieurs modes de réalisation peuvent être envisagés pour les moyens de contrôle MCT.

Dans un premier mode de réalisation, les moyens de contrôle MCT peuvent interdire la réactivation de la recharge à basse vitesse pendant une durée choisie qui est égale à une première durée prédéfinie d1 qui débute juste après le début du nouveau déplacement du véhicule V ayant entraîné la désactivation de la recharge. Ce premier mode de réalisation est bien adapté au cas où le véhicule V est à conduite manuelle, ou bien au cas où le véhicule V est à conduite au moins partiellement autonome.

Dans ce premier mode de réalisation, les moyens de contrôle MCT peuvent utiliser une première durée prédéfinie d1 qui est, par exemple, comprise entre une seconde et une minute. A titre d'exemple, cette première durée prédéfinie d1 peut être choisie égale à dix secondes.

En d'autres termes, dans ce premier mode de réalisation dès que débute un nouveau déplacement du véhicule V consécutif à un premier bref arrêt de ce dernier (V), les moyens de contrôle MCT déclenchent une première temporisation de la première durée prédéfinie d1 et provoquent l'interdiction de la réactivation de la recharge à basse vitesse jusqu'à l'expiration de cette première temporisation. Si à l'expiration de cette dernière le véhicule V est toujours à l'arrêt alors une nouvelle phase de recharge à basse vitesse pourra recommencer.

Cette situation est illustrée par le premier exemple de situation de vie représenté par le diagramme de la figure 3. Ici, c1' est une courbe d'évolution temporelle de l'enfoncement de la pédale d'accélérateur du véhicule V dans une phase de conduite manuelle, c2' est une courbe d'évolution temporelle de la vitesse de ce véhicule V en présence de la courbe c1', et c3' est une courbe d'évolution temporelle de la recharge à basse vitesse du premier moyen de stockage d'énergie MS1 contrôlée par le dispositif de contrôle DC en présence des courbes c1' et c2'.

Ce premier exemple correspond à une manœuvre à basse vitesse débutant, comme le montrent les courbes c1' et c2', par un premier arrêt bref, puis se poursuivant par un nouveau déplacement en marche arrière débutant à un instant t1 qui constitue le début de la première temporisation de la première durée d1, puis se poursuivant par un deuxième arrêt bref, puis se poursuivant par un autre déplacement en marche avant, puis se poursuivant par un troisième arrêt bref, puis se poursuivant par encore un autre déplacement en marche avant assez long, puis se terminant par un quatrième arrêt long et final dont le début marque la fin de la manœuvre.

On notera que la première temporisation (de la première durée d1) débute à l'instant t1 et se termine ici à un instant t3 où le véhicule V circule en marche avant. Par conséquent, les moyens de contrôle MCT n'autorisent pas une nouvelle phase de recharge à basse vitesse. Ce n'est seulement qu'à l'instant t5, où se termine le dernier déplacement en marche avant assez long et où débute le quatrième arrêt long et final, que les moyens de contrôle MCT déclenchent une nouvelle phase de recharge à basse vitesse du fait que la vitesse du véhicule V est repassée en dessous du seuil prédéfini s1.

Dans un deuxième mode de réalisation (variante du premier), les moyens de contrôle MCT peuvent interdire la réactivation de la recharge pendant une durée choisie qui est égale à une seconde durée prédéfinie d2 qui débute juste après la fin du nouveau déplacement du véhicule V ayant entraîné la désactivation de la recharge. Ce deuxième mode de réalisation est également bien adapté au cas où le véhicule V est à conduite manuelle, ou bien au cas où le véhicule V est à conduite au moins partiellement autonome.

Dans ce deuxième mode de réalisation, les moyens de contrôle MCT peuvent utiliser une seconde durée prédéfinie d2 qui est, par exemple, comprise entre cinq secondes et deux minutes. A titre d'exemple, cette seconde durée prédéfinie d2 peut être choisie égale à une minute.

En d'autres termes, dans ce deuxième mode de réalisation ce n'est qu'à la fin du nouveau déplacement du véhicule V consécutif à un premier bref arrêt de ce dernier (V), que les moyens de contrôle MCT déclenchent une seconde temporisation de la seconde durée prédéfinie d2 et provoquent l'interdiction de la réactivation de la recharge à basse vitesse jusqu'à l'expiration de cette seconde temporisation. En effet, dès que commence le nouveau déplacement précité après le premier bref arrêt, les moyens de contrôle MCT n'autorisent pas une nouvelle phase de recharge à basse vitesse, car c'est le mode de fonctionnement classique. Si à l'expiration de la seconde temporisation le véhicule V est toujours à l'arrêt alors une nouvelle phase de recharge à basse vitesse pourra recommencer.

A titre d'exemple, dans le cas d'une manœuvre de stationnement dans laquelle le nouveau déplacement du véhicule V est une marche arrière, c'est le passage de la marche arrière à la marche avant (en fin de ce nouveau déplacement) qui va induire le déclenchement de la seconde temporisation.

Cette situation est également illustrée par le premier exemple de situation de vie représenté par le diagramme de la figure 3. On notera que la seconde temporisation (de la seconde durée d2) débute à l'instant t2 (où se termine le nouveau déplacement) et se termine ici à un instant t6 où le véhicule V est à l'arrêt (après la fin de sa manœuvre à l'instant t5). Les moyens de contrôle MCT devraient en principe empêcher toute nouvelle recharge à basse vitesse jusqu'à l'instant t6 d'expiration de sa seconde temporisation. Cependant, dans l'exemple illustré non limitativement, à un instant t4 la vitesse du véhicule V devient supérieure à une vitesse seuil vₘₐₓ, et donc les moyens de contrôle MCT sont agencés pour interrompre et remettre à zéro la seconde temporisation. Par conséquent, dès que la vitesse du véhicule V redevient inférieure au seuil prédéfini s1 (instant t5) les moyens de contrôle MCT déclenchent une nouvelle phase de recharge à basse vitesse (voir c3'). On notera que dans le premier mode de réalisation les moyens de contrôle MCT peuvent être également agencés pour interrompre et remettre à zéro la première temporisation lorsque la vitesse du véhicule V devient supérieure à la vitesse seuil vₘₐₓ.

Un troisième mode de réalisation peut être mis en œuvre lorsque le véhicule V comprend également un dispositif d'assistance chargé de le conduire de façon au moins partiellement autonome, et notamment de décider et contrôler une manœuvre à basse vitesse. Un tel dispositif d'assistance peut, par exemple, être de type ADAS (« Advanced Driver Assistance System »)). Dans ce cas, les moyens de contrôle MCT interdisent la réactivation de la recharge à basse vitesse (qu'ils ont préalablement déclenchée lorsque la vitesse du véhicule V est devenue inférieure au seuil prédéfini s1) en cas de réception d'un message signalant le début d'une manœuvre à basse vitesse et généré par le dispositif d'assistance, et cessent d'interdire la réactivation de la recharge à basse vitesse, en cas de réception d'un message signalant l'arrêt final du véhicule V et généré par le dispositif d'assistance à la fin de cette manœuvre à basse vitesse.

La durée choisie d'interdiction de réactivation est alors égale au temps écoulé entre l'instant de réception du message de début de manœuvre et l'instant de réception du message d'arrêt final (ou fin de manœuvre).

En d'autres termes, dans ce troisième mode de réalisation lorsque les moyens de contrôle MCT ont déclenché une phase de recharge à basse vitesse et qu'ils sont informés par le dispositif d'assistance du début d'une manœuvre à faible vitesse, ils interdisent la réactivation de cette phase de recharge à basse vitesse jusqu'à ce qu'ils soient informés par le dispositif d'assistance de la fin de cette manœuvre à basse vitesse. Si à la fin de cette dernière le véhicule V est toujours à l'arrêt, alors la phase de recharge à basse vitesse pourra recommencer.

Cette situation est illustrée par le second exemple de situation de vie représenté par le diagramme de la figure 4. Ici, c1" est une courbe d'évolution temporelle de l'enfoncement de la pédale d'accélérateur virtuelle du véhicule V dans une phase de conduite autonome destinée à le garer en créneau, c2" est une courbe d'évolution temporelle de la vitesse de ce véhicule V en présence de la courbe c1", et c3" est une courbe d'évolution temporelle de la recharge à basse vitesse du premier moyen de stockage d'énergie MS1 contrôlée par le dispositif de contrôle DC en présence des courbes c1" et c2". En conduite autonome, la courbe c1" est virtuelle car le conducteur n'appuie pas sur la pédale d'accélérateur.

Dans ce second exemple, les moyens de contrôle MCT ont déclenché une phase de recharge à basse vitesse et à un instant t1 ils sont informés par le dispositif d'assistance du début d'une manœuvre à faible vitesse. Par conséquent à partir de cet instant t1, les moyens de contrôle MCT interdisent la réactivation de la phase de recharge à basse vitesse jusqu'à ce qu'ils soient informés par le dispositif d'assistance de la fin de cette manœuvre à basse vitesse à un instant t2. Ici, à cet instant t2 on considère que le calculateur de supervision CS a cessé de faire fonctionner le GMP. Par conséquent, il n'y a pas de reprise de la phase de recharge à basse vitesse après l'instant t2 (mais cela pourrait être le cas si le véhicule V était à l'arrêt avec son GMP en fonctionnement).

Il est également important de noter que l'invention peut être aussi considérée sous l'angle d'un procédé de contrôle, pouvant être notamment mis en œuvre au moyen d'un dispositif de contrôle DC du type de celui présenté ci-avant. Les fonctionnalités offertes par la mise en œuvre du procédé selon l'invention étant identiques à celles offertes par le dispositif de contrôle DC présenté ci-avant, seule la combinaison de fonctionnalités principales offerte par le procédé de contrôle est présentée ci-après.

Ce procédé de contrôle comprend une étape dans laquelle :
- on (le dispositif de contrôle DC) place les moyens de changement de rapport BV dans leur état ouvert pour recharger le premier moyen de stockage d'énergie MS1 avec la première machine motrice MM1 lorsque le véhicule V à une basse vitesse (inférieure au seuil prédéfini s1), et
- on (le dispositif de contrôle DC) interdit pendant une durée choisie une réactivation de la recharge en cas de bref arrêt du véhicule V, représentatif d'un début de manœuvre, suivi d'un nouveau déplacement à basse vitesse du véhicule V entraînant une désactivation de la recharge.

L'invention permet de tendre vers un bon niveau d'agrément global (conduite et confort), notamment lorsque le moyen de stockage d'énergie est déchargé à basse vitesse.

## Revendications

1. Dispositif de contrôle (DC) pour un véhicule (V) comprenant
i) un train (T1),
ii) au moins un moyen de stockage d'énergie (MS1),
iii) une première machine motrice (MM1) non-thermique propre à être couplée audit train (T1) via des moyens de changement de rapport (BV) ayant un état ouvert de découplage et un état fermé de couplage, et
iv) une seconde machine motrice (MM2) thermique et propre à être couplée audit train (T1) via des moyens de couplage (MCP) ayant un état ouvert de découplage et un état fermé de couplage, ladite première machine motrice (MM1) et lesdits moyens de changement de rapport (BV),
ledit dispositif (DC) comprenant des moyens de contrôle (MCT) déclenchant un placement desdits moyens de changement de rapport (BV) dans leur état ouvert et un placement desdits moyens de couplage (MCP) dans leur état fermé pour recharger ledit moyen de stockage d'énergie (MS1) avec ladite première machine motrice (MM1) lorsque ledit véhicule (V) a une basse vitesse inférieure ou égale à un seuil prédéfini de 5 km/h, **caractérisé en ce que** lesdits moyens de contrôle (MCT) interdisent pendant une durée choisie une réactivation de la recharge en cas de bref arrêt compris entre 300 ms et 2 secondes dudit véhicule (V), représentatif d'un début de manœuvre, suivi d'un nouveau déplacement à basse vitesse dudit véhicule (V) entraînant une désactivation de ladite recharge.

2. Dispositif selon la revendication 1, **caractérisé en ce que** lesdits moyens de contrôle (MCT) interdisent ladite réactivation de la recharge pendant une durée choisie qui est égale à une première durée prédéfinie débutant juste après le début du nouveau déplacement dudit véhicule (V) ayant entraîné la désactivation de ladite recharge.

3. Dispositif selon la revendication 2, **caractérisé en ce que** ladite première durée prédéfinie est comprise entre une seconde et une minute.

4. Dispositif selon la revendication 1, **caractérisé en ce que** lesdits moyens de contrôle (MCT) interdisent ladite réactivation de la recharge pendant une durée choisie qui est égale à une seconde durée prédéfinie débutant juste après une fin dudit nouveau déplacement du véhicule (V) ayant entraîné la désactivation de ladite recharge.

5. Dispositif selon la revendication 4, **caractérisé en ce que** ladite seconde durée prédéfinie est comprise entre cinq secondes et deux minutes.

6. Dispositif selon l'une des revendications 1 à 5, **caractérisé en ce que** lesdits moyens de contrôle (MCT) sont agencés pour détecter ledit bref arrêt débutant une manœuvre lorsqu'il est compris entre 300 ms et 2 secondes.

7. Dispositif selon la revendication 1, **caractérisé en ce que** ledit véhicule (V) comprend en outre un dispositif d'assistance chargé de le conduire de façon au moins partiellement autonome, et notamment permettant de décider et contrôler ladite manœuvre, lesdits moyens de contrôle (MCT) interdisant aussi une réactivation de la recharge en cas de réception d'un message généré par ledit dispositif d'assistance signalant le début d'une manœuvre , et cessant cette interdiction en cas de réception d'un message généré par ledit dispositif d'assistance à la fin de ladite manœuvre signalant ledit arrêt final du véhicule (V).

8. Véhicule (V) comprenant
i) un train (T1),
ii) au moins un moyen de stockage d'énergie (MS1),
iii) une première machine motrice (MM1) non-thermique et propre à être couplée audit train (T1) via des moyens de changement de rapport (BV) ayant un état ouvert de découplage et un état fermé de couplage, et
iv) une seconde machine motrice (MM2) thermique et propre à être couplée audit train (T1) via des moyens de couplage (MCP), ladite première machine motrice (MM1) et lesdits moyens de changement de rapport (BV),
**caractérisé en ce qu'**il comprend en outre un dispositif de contrôle (DC) selon l'une des revendications 1 à 6.

9. Véhicule (V) comprenant
v) un train (T1),
vi) au moins un moyen de stockage d'énergie (MS1),
vii) une première machine motrice (MM1) non-thermique et propre à être couplée audit train (T1) via des moyens de changement de rapport (BV) ayant un état ouvert de découplage et un état fermé de couplage, et
viii) une seconde machine motrice (MM2) thermique et propre à être couplée audit train (T1) via des moyens de couplage (MCP), ladite première machine motrice (MM1) et lesdits moyens de changement de rapport (BV),
**caractérisé en ce qu'**il comprend en outre un dispositif d'assistance chargé de le conduire de façon au moins partiellement autonome et un dispositif de contrôle (DC) selon la revendication 7.

10. Procédé de contrôle (DC) pour un véhicule (V) comprenant
i) un train (T1),
ii) au moins un moyen de stockage d'énergie (MS1),
iii) une première machine motrice (MM1) non-thermique et propre à être couplée audit train (T1) via des moyens de changement de rapport (BV) ayant un état ouvert de découplage et un état fermé de couplage, et
iv) une seconde machine motrice (MM2) thermique et propre à être couplée audit train (T1) via des moyens de couplage (MCP) ayant un état ouvert de découplage et un état fermé de couplage, ladite première machine motrice (MM1) et lesdits moyens de changement de rapport (BV),
ledit procédé comprenant une étape dans laquelle on place lesdits moyens de changement de rapport (BV) dans leur état ouvert et lesdits moyens de couplage (MCP) dans leur état fermé pour recharger ledit moyen de stockage d'énergie (MS1) avec ladite première machine motrice (MM1) lorsque ledit véhicule (V) a une basse vitesse inférieure ou égale à un seuil prédéfini de 5 km/h, **caractérisé en ce que** dans ladite étape on interdit pendant une durée choisie une réactivation de la recharge en cas de bref arrêt compris entre 300 ms et 2 secondes dudit véhicule, (V) représentatif d'un début de manœuvre, suivi d'un nouveau déplacement à basse vitesse dudit véhicule (V) entraînant une désactivation de ladite recharge.

## Patentansprüche

1. Steuervorrichtung (DC) für ein Fahrzeug (V) umfassend
i) ein Zug (T1),
ii) mindestens ein Energiespeichermittel (MS1),
iii) eine erste nicht-thermische Antriebsmaschine (MM 1), die zum Koppeln mit dem Zug (T1) über Gangwechselmittel (BV) mit einem offenen Entkopplungszustand und einem geschlossenen Kopplungszustand geeignet ist, und
iv) eine zweite Antriebsmaschine (MM2), die thermisch und angepasst ist, um über Kopplungsmittel (MCP) mit einem offenen Entkopplungszustand und einem geschlossenen Kopplungszustand an einen Prüfprozess (T1) gekoppelt zu werden, wobei die erste Antriebsmaschine (MM1) und das Gangwechselmittel (BV),
wobei die Einrichtung (CD), umfassend Steuermittel (MCT) ein Plazieren der Schaltmittel (BV) in ihrem offenen Zustand auslösenden und eine Anordnung der besagten Kopplungsmittel (MCP) in ihrem geschlossenen Zustand zum Wiederaufladen der e der Mittel Energiespeicher (MS1) mit dem ersten Primärantrieb (MM 1), wenn das Fahrzeug (V) weist eine mit niedriger Geschwindigkeit kleiner oder gleich einer vordefinierten Schwelle von 5 km / h, **dadurch gekennzeichnet, daß** die Steuereinrichtung (MCT) für einen ausgewählten Zeitraum das Reaktivieren des Ladevorgangs im Falle eines kurzen Stopps zwischen 300 ms und 2 Sekunden des Fahrzeugs (V), der für einen Betriebsstart repräsentativ ist, gefolgt von einer neuen Bewegung in der niedrigen Fahrzeuggeschwindigkeit (V) verbieten), was zur Deaktivierung der Wiederaufladung führt.

2. Vorrichtung nach Anspruch 1, **dadurch gekennzeichnet, dass** das Steuermittel (MCT) die Reaktivierung des Wiederaufladens für eine gewählte Dauer verbietet, die gleich einer ersten vordefinierten Dauer ist, die unmittelbar nach dem Start der neuen Bewegung des Fahrzeugs (V) beginnt, die verursacht hat die Deaktivierung der Aufladung.

3. Vorrichtung nach Anspruch 2, **dadurch gekennzeichnet, dass** die erste vordefinierte Dauer zwischen einer Sekunde und einer Minute liegt.

4. Vorrichtung nach Anspruch 1, **dadurch gekennzeichnet, dass** das Steuermittel (MCT) die Reaktivierung des Wiederaufladens für eine gewählte Dauer verbietet, die gleich einer zweiten vordefinierten Dauer ist,
die unmittelbar nach dem Ende der neuen Bewegung des Fahrzeugs (V) beginnt, die verursacht hat die Deaktivierung der Aufladung.

5. Vorrichtung nach Anspruch 4, **dadurch gekennzeichnet, dass** die zweite vordefinierte Dauer zwischen fünf Sekunden und zwei Minuten liegt.

6. Vorrichtung nach einem der Ansprüche 1 bis 5, **gekennzeichnet dadurch, dass** die Steuermittel (MCT) so angeordnet sind, dass sie den kurzen Stopp erfassen, der ein Manöver startet, wenn es zwischen 300 ms und 2 Sekunden liegt.

7. Vorrichtung nach Anspruch 1, **dadurch gekennzeichnet, dass** das Fahrzeug (V) ferner eine Vorrichtung zur Unterstützung des Fahrens auf dem zumindest teilweise autonomen Weg und insbesondere zum Entscheiden und Steuern des Betriebs der Steuermittel (MCT) umfasst) verbieten nt auch der Lade Reaktivierung bei einer Nachricht des Empfangens durch das erzeugte Unterstützungsvorrichtung den Start eines Manövers Signalisierung und Cess hat nt dieses Verbot auf Empfang einer Nachricht von der erzeugten Unterstützungsvorrichtung am Ende des Manövers , die den Endanschlag des Fahrzeugs signalisiert (V).

8. Fahrzeug (V) einschließlich
i) ein Zug (T1),
ii) mindestens ein Energiespeichermittel (MS1),
iii) eine erste nicht-thermische Antriebsmaschine (MM 1), die über Gangwechselmittel (BV) mit einem offenen Entkopplungszustand und einem geschlossenen Kupplungszustand mit dem Zug (T1) gekoppelt werden kann, und
iv) ein e zweite Antriebsmaschine (MM2) thermische und angepasst gekoppelt zu werden einen Prüfungsprozess (T1) über Kopplungsmittel (MCP), wobei die erste Antriebsmaschine (MM 1) und das Gangschaltmittel (BV),
**dadurch gekennzeichnet, dass** es ferner eine Steuervorrichtung (DC) gemäß einem der Ansprüche 1 bis 6 umfasst.

9. Fahrzeug (V) einschließlich
v) einen Zug (T1),
vi) mindestens ein Energiespeichermittel (MS1),
vii) eine erste nicht-thermische Antriebsmaschine (MM1), die über Gangwechselmittel (BV) mit einem offenen Entkopplungszustand und einem geschlossenen Kupplungszustand mit dem Zug (T1) gekoppelt werden kann, und
viii) eine zweite thermische Antriebsmaschine (MM2), die geeignet ist, über Kopplungsmittel (MCP), die erste Antriebsmaschine (MM1) und
die Gangschaltmittel (BV) mit dem Zug (T1) gekoppelt zu werden,
**dadurch gekennzeichnet, dass** es ferner eine Vorrichtung zur Unterstützung des Fahrens des zumindest teilweise autonomen Weges und eine Steuervorrichtung (CD) nach Anspruch 7 umfasst.

10. Steuermethode (DC) für ein Fahrzeug (V) umfassend
i) ein Zug (T1),
ii) mindestens ein Energiespeichermittel (MS1),
iii) eine erste nicht-thermische Antriebsmaschine (MM 1), die über Gangwechselmittel (BV) mit einem offenen Entkopplungszustand und einem geschlossenen Kupplungszustand mit dem Zug (T1) gekoppelt werden kann, und
iv) ein zweite Antriebsmaschine (MM2) thermische und angepasst gekoppelt zu werden einen Prüfungsprozess (T1) über Kopplungsmittel (MCP) mit einem offenen Zustand zum Entkoppeln und ein geschlossene Zustand Kopplungs des ersten Antriebsmaschine (MM 1) und das Gangwechselmittel (BV),
wobei das Verfahren einen Schritt des Anordnens des Gangschaltmittel (BV) in ihrem offenen Zustand aufweist und die Kopplungsmittel (MCP) in ihrem geschlossenen Zustand zum Wiederaufladen
der Energiespeichermittel (MS1) mit dem erste Antriebsmaschine (MM 1), wenn das Fahrzeug (V) weist eine mit niedriger Geschwindigkeit kleiner oder gleich einer vordefinierten Schwelle von 5 km/h, **dadurch gekennzeichnet, dass** in dem Schritt a Reaktivierung der Wiederaufladung wird verboten für einen ausgewählten Zeitraum im Falle kurzes Anhalten zwischen 300 ms und 2 Sekunden des Fahrzeugs, (V) repräsentativ für den Start eines Manövers, gefolgt von einer weiteren Bewegung des Fahrzeugs mit niedriger Geschwindigkeit (V), wodurch das Aufladen deaktiviert wird.

## Claims

1. Control device (DC) for a vehicle (V) comprising
i) a train (T1),
ii) at least one energy storage means (MS1),
iii) a first non-thermal drive machine (MM 1) suitable for being coupled to said train (T1) via gear change means (BV) having an open state of decoupling and a closed state of coupling, and
iv) a e second prime mover (MM2) thermal and adapted to be coupled to an audit process (T1) via coupling means (MCP) having an open state for decoupling and a closed state of coupling, said first prime mover (MM1) and said gear changing means (BV),
said device (CD) comprising control means (MCT) triggering a placing said gearshift means (BV) in their open state and a placement of said coupling means (MCP) in their closed state for recharging the e said means energy storage (MS1) with said first prime mover (MM 1) when said vehicle (V) has a low speed less than or equal to a predefined threshold of 5 km / h, **characterized in that** said control means (MCT) prohibit for a period selected reactivating the charging in case of e brief stop between 300 ms and 2 seconds of said vehicle (V), representative of a start of operation, followed by a new movement in said low vehicle speed (V) resulting in deactivation of said recharge.

2. Device according to Claim 1, **characterized in that** the said control means (MCT) prohibit the said reactivation of the recharging for a chosen duration which is equal to a first predefined duration starting just after the start of the new movement of the said vehicle (V) having caused the deactivation of said recharge.

3. Device according to Claim 2, **characterized in that** the said first predefined duration is between one second and one minute.

4. Device according to Claim 1, **characterized in that** the said control means (MCT) prohibit the said reactivation of the recharging for a chosen duration which is equal to a second predefined duration starting just after an end of the said new movement of the vehicle (V) having caused the deactivation of said recharge.

5. Device according to Claim 4, **characterized in that** the said second predefined duration is between five seconds and two minutes.

6. Device according to one of Claims 1 to 5, **characterized in that** said control means (MCT) are arranged to detect said brief stop starting a maneuver when it is between 300 ms and 2 seconds.

7. Device according to Claim 1, **characterized in that** said vehicle (V) comprises further a device for assisting in charge of driving the at least partially autonomous way, and in particular for deciding and controlling said operation, said control means (MCT ) forbid to nt also reactivation of charging in the event of receiving a message generated by said assisting device signaling the start of a maneuver, and cess has nt that prohibition on reception of a message generated by said assistance device at the end of said maneuver signaling said final stop of the vehicle (V).

8. Vehicle (V) including
i) a train (T1),
ii) at least one energy storage means (MS1),
iii) a first non-thermal drive machine (MM 1) capable of being coupled to said train (T1) via gear change means (BV) having an open state of decoupling and a closed state of coupling, and
iv) a e second prime mover (MM2) thermal and adapted to be coupled to an audit process (T1) via coupling means (MCP), said first prime mover (MM 1) and said gearshift means (BV),
**characterized in that** it further comprises a control device (DC) according to one of claims 1 to 6.

9. Vehicle (V) including
v) a train (T1),
vi) at least one energy storage means (MS1),
vii) a first non-thermal motive machine (MM1) capable of being coupled to said train (T1) via gear changing means (BV) having an open state of decoupling and a closed state of coupling, and
viii) a second thermal drive machine (MM2) suitable for being coupled to said train (T1) via coupling means (MCP), said first drive machine (MM1) and said gear changing means (BV),
**characterized in that** it comprises further a device for assisting in charge of driving the at least partially autonomous way and a control device (CD) according to claim 7.

10. Control method (DC) for a vehicle (V) including
i) a train (T1),
ii) at least one energy storage means (MS1),
iii) a first non-thermal drive machine (MM 1) capable of being coupled to said train (T1) via gear change means (BV) having an open state of decoupling and a closed state of coupling, and
iv) a e second prime mover (MM2) thermal and adapted to be coupled to an audit process (T1) via coupling means (MCP) having an open state for decoupling and a closed condition coupling said first prime mover (MM 1) and said gear change means (BV),
said method comprising a step of placing said gearshift means (BV) in their open state and said coupling means (MCP) in their closed state for recharging the e said energy storage means (MS1) with said first driving machine (MM 1) when said vehicle (V) has a low speed less than or equal to a predefined threshold of 5 km/h, **characterized in that** in said step a reactivation of the recharge is prohibited for a selected period in the event of a brief stop of between 300 ms and 2 seconds of said vehicle , (V) representative of the start of a maneuver, followed by a further low speed movement of said vehicle (V) causing said recharging to be deactivated .
